# EUROPEAN PATENT APPLICATION

(11) **EP 3 382 984 A1**
(43) Date of publication of application: **03.10.2018**
(21) Application number: 18154440.4
(22) Date of filing: 31.01.2018
(51) Int. Cl.: H04L 29/06, H04L 29/08, H04L 12/18

(54) **TECHNIQUES FOR NETWORK MULTICASTING WITH BUFFERING**

(30) Priority: 31.03.2017 US 201715476929
(71) Applicant: INTEL Corporation, Santa Clara, CA 95054 (US)
(72) Inventor: SOSNOWSKI, Maciej, 80283 Gdansk (PL); WALUKIEWICZ, Miroslaw, 80278 Gdansk (PL); FRYCA, Waldemar, 81611 Gdynia (PL)
(74) Representative: Samson & Partner Patentanwälte mbB

(57) **Abstract**

Examples can include buffering techniques for transmission control protocol (TCP) based multicast networks. Various devices in the multicast network can include buffering features to behave as a proxy for the source server, thereby splitting the network into multiple subdomains. Each subdomain could therefore independently provide error control for the TCP-based multicast network.

## Description

### TECHNICAL FIELD

Embodiments described herein generally relate to communication between devices in multicast networks.

### BACKGROUND

In a multicast network, data sent from a source server may be routed to a plurality of client devices. Such data may be routed to the client devices through a multicast tree, via various routing nodes in the multicast network. A given routing node may receive data from an adjacent upstream node, which may comprise a routing node of a higher layer or may comprise the source server itself. The given routing node may forward the received data to a plurality of adjacent downstream nodes, which may comprise routing nodes of a lower layer or may comprise client devices.

### BRIEF DESCRIPTION OF THE DRAWINGS

**FIG. 1** illustrates an embodiment of a multicast network.
**FIG. 2** illustrates an embodiment of an apparatus and an embodiment of a system.
**FIG. 3** illustrates a first portion of the apparatus of FIG. 2 in greater detail.
**FIG. 4** illustrates a second portion of the apparatus of FIG. 2 in greater detail
**FIG. 5** illustrates a first embodiment of a logic flow.
**FIG. 6** illustrates a second embodiment of a logic flow.
**FIG. 7** illustrates an embodiment of a storage medium.
**FIG. 8** illustrates an embodiment of a computing architecture.
**FIG. 9** illustrates an embodiment of a communications architecture.

### DETAILED DESCRIPTION

Various embodiments may be generally directed to buffering techniques for transmission control protocol (TCP) based multicast networks. Various devices in the multicast network can include buffering features to behave as a proxy for the source server, thereby splitting the network into multiple subdomains. Each subdomain could therefore independently provide error control for the TCP-based multicast network. In some examples, the present disclosure can provide TCP-based multicast networks that scale well as the number of clients and nodes are added to the device. Splitting the network into subdomains with proxy devices can provide error flow congestion control (EFCC) within each subdomain. Thus, undesirable effects of large scale deployments might be isolated into individual subdomains and destructive impacts on such effects might be mitigated. The proxy devices and buffers provide that dropped segments of data transmitted through the network do not necessitate retransmission of the segment all the way through the multicast tree (e.g., from the source server to the client). Instead, retransmission from the last proxy that has successfully received the segment is sufficient, which might lead to increased network utilization efficiency.

In some embodiments, an apparatus may comprise at least one memory and logic for routing data at a node of a TCP multicast tree, at least a portion of the logic comprised in hardware coupled to the at least one memory. The logic to receive a data segment from an upstream node, buffer the data segment, and acknowledge receipt of the data segment to the upstream node. The logic further to identify a data segment that has been transmitted to adjacent downstream nodes, determine whether each of the adjacent downstream nodes have acknowledged at least one previous transmission of the data segment. In response to a determination that one or more of the adjacent downstream nodes have not acknowledged at least one previous transmission of the data segment, forward the data segment to each of the one or more adjacent downstream nodes. Alternatively, in response to a determination that the adjacent downstream nodes have acknowledged at least one previous transmission of the data segment, flush the data segment from the buffer. Other embodiments are described and claimed.

Various embodiments may comprise one or more elements. An element may comprise any structure arranged to perform certain operations. Each element may be implemented as hardware, software, or any combination thereof, as desired for a given set of design parameters or performance constraints. Although an embodiment may be described with a limited number of elements in a certain topology by way of example, the embodiment may include more or less elements in alternate topologies as desired for a given implementation. It is worthy to note that any reference to "one embodiment" or "an embodiment" means that a particular feature, structure, or characteristic described in connection with the embodiment is included in at least one embodiment. The appearances of the phrases "in one embodiment," "in some embodiments," and "in various embodiments" in various places in the specification are not necessarily all referring to the same embodiment.

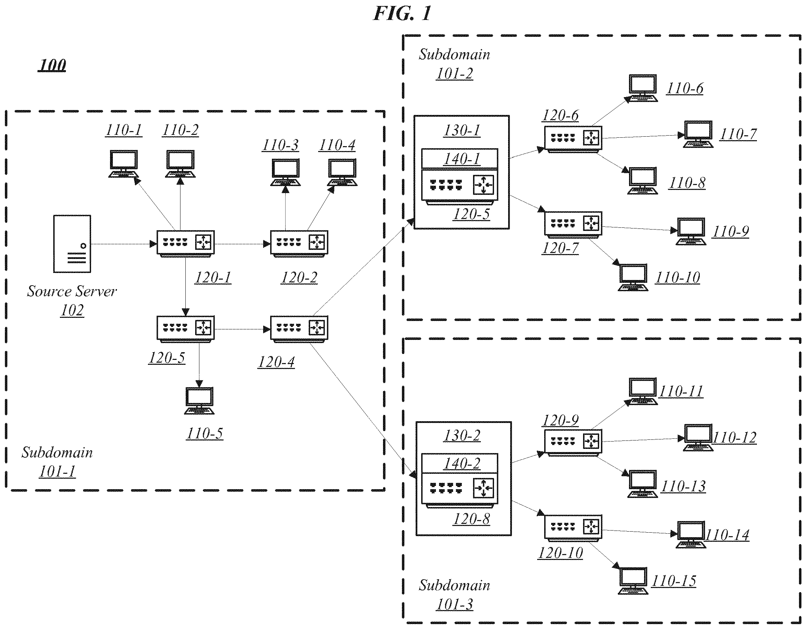

**FIG. 1** illustrates an example of a multicast network 100 that may be representative of various embodiments. As depict in this figure, multicast network 100 is arranged in a tree structure. Multicast network 100 includes a source server 102 that resides at a top layer of multicast network 100, and sends data downstream through the network to a plurality of clients 110. For example, this figure illustratively depicts clients 110-1, 110-2, 110-3, 110-4, 110-5, 110-6, 110-7, 110-8, 110-9, 110-10, 110-11, 110-12, 110-13, 110-14 and 110-15, referred to collectively as clients 110-1 to 110-15 or simply clients 110. Additionally, clients 110 can be referred to individually as a specific client, for example, client 110-2, or merely client 110. The plural or singular denotation it to be understood from the context of the description and figures. It is noted that the number of clients 110 depicted is given for purposes of clarity of presentation only and not to be limiting.

The data that source server 102 transmits is routed to clients 110 via various multicast group routing devices (MGRD) 120 that form routing node, or simply nodes, of multicast network 100. For example, this figure illustratively depicts MGRDs 120-1, 120-2, 120-3, 120-4, 120-5, 120-6, 120-7, 120-8, 120-9 and 120-10, referred to collectively as MGRDs 120-1 to 120-10 or simply MGRDs 120. Additionally, MGRDs 120 can be referred to individually as a specific MGRD, for example, MGRD 120-4, or merely MGRD 120. The plural or singular denotation it to be understood from the context of the description and figures. It is noted that the number of MGRDs 120 depicted is given for purposes of clarity of presentation only and not to be limiting.

Network traffic flows from source server 102 to clients 110, via MGRDs 120. In the discussion that follows, the term "adjacent upstream node" shall be employed to denote - with respect to a given MGRD 120 - an upstream node that provides data to that MGRD 120 directly, rather than indirectly via one or more intervening MGRDs 120. Likewise, the term "adjacent downstream node" shall be employed to denote - with respect to a given MGRD 120 - a downstream node to which that MGRD 120 provides data directly, rather than indirectly via one or more intervening MGRDs 120.

Multicast network 100 is further divided into subdomains 101. For example, the multicast network 100 is depicted including three subdomains 101-1, 101-2 and 101-3, referred to collectively as subdomains 101-1 to 101-3 or simply subdomains 101. Subdomains 101 can be referred to individually as a specific subdomain, for example, subdomain 101-2, or merely subdomain 101. The plural or singular denotation it to be understood from the context of the description and figures. It is noted that the number of subdomains 101 depicted is given for purposes of clarity of presentation only and not to be limiting.

Each subdomain 101 is defined by a top-level node and multiple sub-nodes. The top-level node in the top-level subdomain (e.g., subdomain 101-1) can be the source server 102. For example, subdomain 101-1 includes source server 102 as the top-level node in the subdomain. The top-level node in lower level subdomains (e.g., subdomains 101-2 and 101-3, or the like) can be a multicast transmission control protocol (TCP) proxy 130. For example, subdomains 101-2 and 101-3 each include multicast TCP proxy devices 130-1 and 130-2, respectively.

Each multicast TCP proxy devices 130 includes an MGRD 120 and a buffer 140. For example, multicast TCP proxy device 130-1 includes MGRD 120-5 and buffer 140-1 while multicast TCP proxy device 130-2 includes MGRD 120-8 and buffer 140-2. In general, each multicast TCP proxy device 130 is configured to receive multicast data segments from an adjacent upstream node and buffer the multicast data segments in buffer 140. Furthermore, multicast TCP proxy device 130 can acknowledge receipt of the multicast data segments to the adjacent upstream node. Additionally, multicast TCP proxy devices 130 acts as TCP flow congestion control endpoints (e.g., receiver endpoint on the upstream side and transmitter endpoint on the downstream side). For example, multicast TCP proxy devices 130 and specifically, MGRD 120, can route buffered multicast data segments downstream (e.g., to the next subdomain 101 of the multicast network 100) via nodes in the current subdomain 101. In some examples, MGRD 120 can route buffered multicast data segments downstream in accordance with TCP flow congestion control rules. Multicast TCP proxy devices 130 can perform TCP error control and retransmit buffered data segments accordingly. Furthermore, multicast TCP proxy devices 130 can receive acknowledgments of receipt of multicast data segments from downstream multicast TCP proxy devices and flush the multicast data segments from the buffer 140.

As depicted, each proxy device 130 comprises a buffer 140. In general, buffer 140 can be implemented as a computer readable memory or storage device arranged to store multicast data segments. In some examples, buffer 140 can be formed from hardware registers arranged to store multicast data segments. In some examples, buffer 140 can be a memory (e.g., dynamic random access memory, or the like) arranged to store multicast data segments. Proxy devices 130 store multicast data segments (e.g. in buffers 140) to be forwarded downstream in accordance with TCP flow congestion control until reception of these multicast data segments by each of session receivers (e.g., clients 110 in the same subdomain 101, adjacent proxies devices 130, or the like) is confirmed by collective acknowledgments (ACKs) respective to these multicast data segments.

In some examples, buffer 140 can comprise a quantity of storage based on the number subdomains, nodes in each subdomain, or nodes without buffering to nodes with buffering. For example, buffer 140 can comprise a quantity of storage based on a ratio of the number of nodes with buffering to the number of nodes without buffering in the network 100. Thus, the "size" (e.g., in bytes, in number of multicast data segments that can be buffered, or the like) of buffers 140 may be configured to balance scalability of the network 100 versus overhead related with resources, latency and performance introduced by multicast TCP routing as described herein.

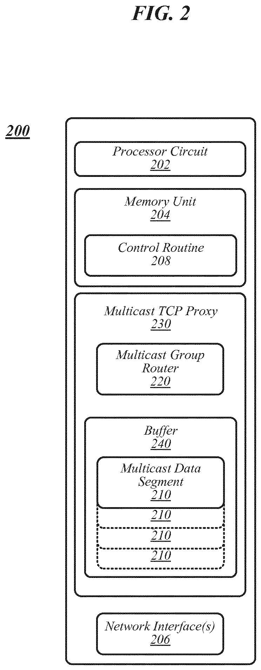

**FIG. 2** illustrates a block diagram of an apparatus 200 that may be representative of a proxy device that may implement a top node of a subdomain 101. For example, apparatus 200 could be proxy device 130-1 or 130-2 of FIG. 1. As depicted in this figure, apparatus 200 comprises multiple elements including a processor circuit 202, a memory unit 204, a multicast group router 220, a multicast TCP proxy 230, a buffer 240, and network interface(s) 206. The embodiments, however, are not limited to the type, number, or arrangement of elements shown in this figure.

In some embodiments, processor circuit 202 may be implemented using any processor or logic device, such as a complex instruction set computer (CISC) microprocessor, a reduced instruction set computing (RISC) microprocessor, a very long instruction word (VLIW) microprocessor, an x86 instruction set compatible processor, a processor implementing a combination of instruction sets, a multi-core processor such as a dual-core processor or dual-core mobile processor, or any other microprocessor or central processing unit (CPU). Processor circuit 202 may also be implemented as a dedicated processor, such as a controller, a microcontroller, an embedded processor, a chip multiprocessor (CMP), a co-processor, a digital signal processor (DSP), a network processor, a media processor, an input/output (I/O) processor, a media access control (MAC) processor, a radio baseband processor, an application specific integrated circuit (ASIC), a field programmable gate array (FPGA), a programmable logic device (PLD), and so forth. In one embodiment, for example, processor circuit 202 may be implemented as a general-purpose processor, such as a processor made by Intel® Corporation, Santa Clara, Calif. The embodiments are not limited in this context.

Apparatus 200 includes memory 204, which may be coupled to processor circuit 202 via one or more busses (not shown). Memory unit 204 may be implemented using any machine-readable or computer-readable media capable of storing data, including both volatile and non-volatile memory. For example, memory unit 204 may include read-only memory (ROM), random-access memory (RAM), dynamic RAM (DRAM), Double-Data-Rate DRAM (DDRAM), synchronous DRAM (SDRAM), static RAM (SRAM), programmable ROM (PROM), erasable programmable ROM (EPROM), electrically erasable programmable ROM (EEPROM), flash memory, polymer memory such as ferroelectric polymer memory, ovonic memory, phase change or ferroelectric memory, silicon-oxide-nitride-oxide-silicon (SONOS) memory, magnetic or optical cards, or any other type of media suitable for storing information. It is worthy of note that some portion or all of memory unit 204 may be included on the same integrated circuit as processor circuit 202, or alternatively some portion or all of memory unit 204 may be disposed on an integrated circuit or other medium, for example a hard disk drive, that is external to the integrated circuit of processor circuit 202. Although memory unit 204 is comprised within apparatus 200 in FIG. 2, memory unit 204 may be external to apparatus 200 in some embodiments. The embodiments are not limited in this context.

Apparatus 200 includes network interface(s) 206, which may be coupled to processor circuit 202 and/or memory 204 via one or more busses (not shown). Network interface(s) 206 may generally enable apparatus 200 to transmit and receive signals to communicate across one or more networks, which may include wired networks, wireless networks, or both. In some embodiments, network interface(s) 206 may enable apparatus 200 to communicate with one or more external devices in a multicast network. For example, in various embodiments, apparatus 200 may be representative of a proxy device 130 within subdomains 101 and network interface(s) 206 may enable apparatus 200 to communicate with an adjacent upstream node in an upstream subdomain (e.g., MGRD 120-4, or the like) and one or more adjacent downstream nodes in the subdomain in which proxy device 130 is disposed.

Memory 204 includes control routine 208. Control routine 208 may include one or more of an operating system, device drivers, virtual machine (VM) management routines and/or application-level routines (e.g., so-called "software suites" provided on disc media, "applets" obtained from a remote server, etc.). Where an operating system and/or VM management routines are included, the operating system and/or VM management routines may be any of a variety of available operating systems, VM management routines or combinations thereof appropriate for processor circuit 202. Where one or more device drivers are included, those device drivers may provide support for any of a variety of other components, whether hardware or software components of apparatus 200.

As depicted, apparatus 200 further includes multicast group router 220, multicast TCP proxy 230 and buffer 240. In some examples, router 220, proxy 230 and buffer 240 can be independent components of apparatus 240. In some examples one or more of router 220, proxy 230 and buffer 240 can be included in control routine 208. In some examples, buffer 240 can be included in memory 204.

In general, proxy 230 can be configured to receive multicast data segments 210 and buffer the multicast data segments 210 within buffer 240. Furthermore, proxy 230 can acknowledge receipt of the buffered multicast data segments 210 upstream (e.g., upstream in network 100 of FIG. 1, or the like). Furthermore, proxy 230 can route multicast data packets 210 downstream in accordance with TCP multicast routing techniques. Additionally, proxy 230 can receive acknowledgment from downstream nodes of multicast data packets 210 that have been routed downstream and can flush ones of multicast data packets 210 based on a determination downstream nodes in the subdomain have received the multicast data packets 210.

In some embodiments, one or more portions of proxy 230 (e.g., router 220, buffer 240, or the like) can be implemented on a host in a data center, which may be directly attached to a router. For example, proxy 230 can be implemented in disaggregate computing elements and/or via a hybrid data plane (e.g., a combination of hardware and software).

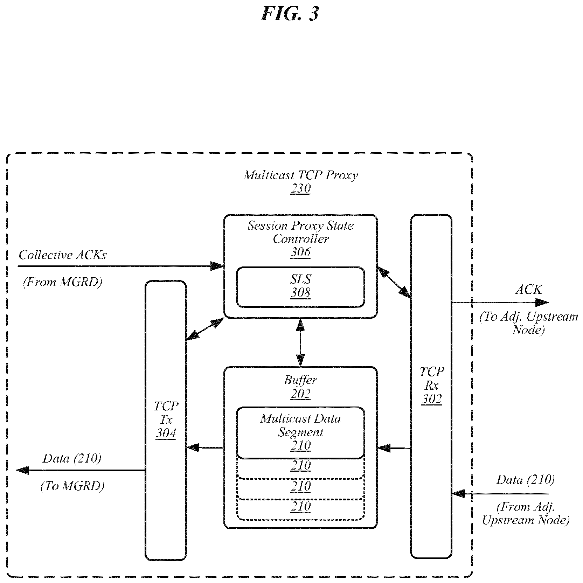

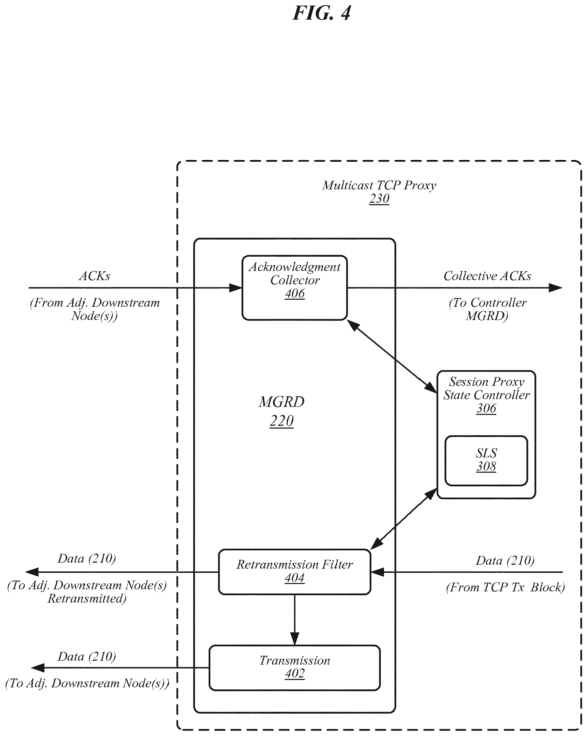

FIGS. 3-4 depict portions of the apparatus 200, and specifically proxy 230, in greater detail. For example, FIG. 3 depicts proxy 230 and portions of proxy 230 to provide buffering and upstream acknowledgment of multicast data segments as described herein while FIG. 4 depicts portions of proxy 230 to provide multicast TCP routing downstream.

Turning to **FIG. 3****,** proxy 230 is depicted including buffer 240. In some examples, proxy 230 can also comprise a TCP Rx block 302, a TCP Tx block 304 and a session proxy state controller 306 maintaining session local state (SLS) information 308. In general, SLS information 308 can include includes indications of information related to the TCP based multicast routing and the nodes within the subdomain to which the proxy 230 is provisioned. In some examples, SLS information 308 can include indications of a set of addresses and ports related with the session. In some examples, SLS information 308 can include indications of multicast addresses, server addresses, router addresses, or the like). In some examples, SLS information 308 can include indications of current state of a local finite state machine (FSM) of the session. In some examples, the FSM indicated in SLS information 308 can be a simplified FSM as compared to a full TCP state machine. For example, with some embodiments, SLS information 308 can include an indication of an FSM having CLOSED, SYN-RECEIVED, ESTABLISHED and LAST-ACK states. Furthermore, in some examples, SLS information 308 can include indications of standard TCP session state elements, such as sequence numbers of received data segments, the last acknowledged number retrieved from received collective ACK segments, receive window size, congestion window size, etc.

The TCP Rx block 302 can include logic, such as hardware circuitry, or software, or a combination of both, to implement a receive side of a TCP stack and simplified transmit side of the TCP stack limited to transmitting control traffic only (ACKs, window updates, etc.). For example, in some embodiments, TCP Rx block 302 may not provide data transmission or transmission of flow control or congestion control. In general, the TCP Rx block 302 can be configured to process multicast data segments (e.g., segments 210) received from an adjacent upstream node, cause the received multicast data segments to be stored in buffer 240. Additionally, TCP Rx block 302 can send an acknowledgment (ACK) upstream (e.g., to acknowledge receipt and storage of multicast data segments 210).

The TCP Tx block 304 can include logic, such as hardware circuitry, or software, or a combination of both, to implement a full transmit side of a TCP stack. In general, TCP Tx block 304 can be configured to retrieve multicast data segments 210 from buffer 240 and schedule downstream routing of multicast data segments 210. Furthermore, TCP Tx block 304 can be configured to process control updates (e.g., received acknowledgments, window size, or the like) based on SLS 308.

Buffer 240 can be configured to store each multicast data segment 210 until acknowledgments are received from downstream nodes. In some examples, the acknowledgments can be a set of collective acknowledgments collected at MGRD 220 and communicated (e.g., via an information element, via a control signal, or the like) to session proxy state controller 306 and indicated in SLS 308. Buffer 240 can flush multicast data segments 210 for which collective acknowledgments have bene received, as indicated in SLS 308.

Turning to **FIG. 4****,** proxy 230 is depicted including MGRD 220. In some examples, MGRD 220 can include a multicast transmitter 402, retransmission filter 404, and an acknowledgment suppressor 406. In general, multicast transmitter 402 and retransmission filter 404 may comprise logic, circuitry, and/or instructions generally operative to manage data segment forwarding operations of proxy 230 to reduce the network bandwidth consumption associated with those operations.

Multicast transmitter 402 can be operative to receive multicast data segments 210 from TCP Tx block 304 and route the multicast data segments 210 downstream in accordance with TPC multicast techniques. Retransmission filter 404 can be operative to retransmit or reroute multicast data segments 210 to adjacent downstream nodes that have need for them. Said differently, retransmission filter 404 can retransmit or reroute multicast data segments 210 to adjacent downstream nodes for which MGRD 220 has not received an acknowledgment.

Acknowledgement collector 406 may comprise logic, circuitry, and/or instructions operative to manage ACK transmission operations of proxy 230 to achieve a reduced frequency of upstream ACK transmissions to help protect the network from potential network overload. More particularly, in various embodiments, acknowledgement collector 406 may be operative to manage ACK transmission operations such that ACKs received from adjacent downstream nodes are not forwarded upstream individually. For example, acknowledgement collector 406 can collect ACKs from adjacent downstream nodes and forward a collective set of ACKs once a set number of ACKs are received, once ACKs from all adjacent downstream nodes are received, or the like.

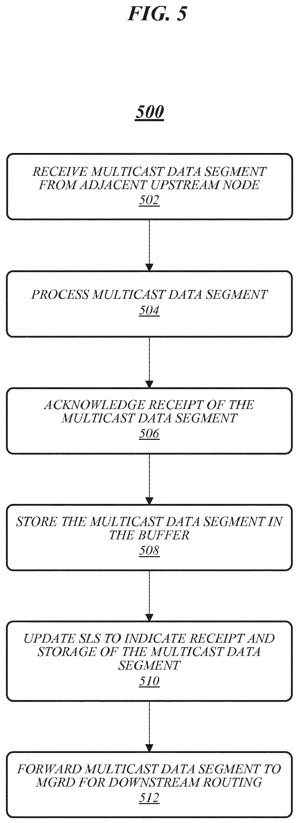

FIGS. 5-6 illustrates example logic flows 500 and 600, respectively, which may be representative of the implementation of one or more of the disclosed proxy routing techniques for TCP-based multicast networks. More particularly, logic flows 500 and 600 may be representative of operations that may be performed by a device, such as apparatus 200 of FIG. 2, acting as a multicast TCP proxy (e.g., multicast TCP proxy 130-1 or 130-2 of FIG. 1, multicast TCP proxy 230 of FIGS. 2-4, or the like). For purposes of clarity, logic flows 500 and 600 are described with reference to multicast TCP proxy 230 of FIGS. 2-4. However, examples of not limited in this context. In general, logic flow 500 depicts operations of multicast TCP proxy 230 is receiving multicast data segments from an upstream source while logic flow 600 depicts operations of multicast TCP proxy 230 is buffering and routing multicast data segments downstream.

Turning to **FIG. 5** and logic flow 500. Logic flow 500 can begin at block 502. At block 502 "receive multicast data segment from adjacent upstream node" a multicast data segment is received from an upstream node. For example, TCP Rx block 302 of proxy 230 can receive a multicast data segment 210 from an adjacent upstream node.

Continuing to block 504 "process multicast data segment" proxy 230 can operate to perform TCP data packet processing in accordance with standard TCP packet handling. In some examples, TCP Rx block 302 processes the received multicast data segment 210 in accordance with standard TCP packet handling. However, with some examples, TCP Rx block 302 may exclude stripping or updating the header for the multicast data segment. For example, in some embodiments, the entire multicast data segment (e.g., Ethernet frame (including L2-L4 headers) can be read only.

Continuing to block 506 "acknowledge receipt of the multicast data segment" proxy 230 an acknowledge receipt of a multicast data segment. For example, 210 TCP Rx block 302 can send an ACK upstream to indicate receipt of the multicast data segment 210 received at block 502. In some examples, TCP Rx block 302 can determine whether to send an ACK based on whether the multicast data segment is a duplicate segment. For example, TCP Rx block 302 can be operative to send an ACK upstream based on data segment processing at block 504 resulting in duplicate ACK generation. In some examples, TCP Rx block 302 sends the ACK upstream regardless of TCP flags associated with the multicast data segment 210. In some examples, TCP Rx block 302 can be operative to skip sending an ACK upstream based on a determination that a SYN flag is set. In such an example, the TCP Rx block 302 can change SYN to SYN-RECEIVED in the SLS 308. In some examples, TCP Rx block 302 can be operative to skip sending an ACK upstream based on a determination that a FIN flag is set. In such an example, the TCP Rx block 302 set FIN to LAST-ACK in SLS 308.

Continuing to block 508 "store the multicast data segment in the buffer" proxy 230 can store the multicast data segment in the buffer 240. For example, TCP Rx block 302 can write and/or send the multicast data segment 210 received at block 502 to the buffer 240 for storage. In some examples, TCP Rx block 302 writes multicast data segments to buffer 240 in the order received. In some examples, TCP Rx block 302 writes multicast data segments to buffer 240 in any order.

Continuing to block 510 "update SLS to indicate receipt and storage of the multicast data segment" proxy 230 can update the session local state information 308 to indicate receipt and processing of the multicast data segment. In some examples, TCP Rx block 302 adds an information element to SLS 308 to indicate receipt of the multicast data segment 210 at block 502 and storage of the multicast data segment 210 in buffer 240 at block 508. For example, TCP Rx block 302 can add indications of a sequence number, a length, a pointer to the frame in buffer 240, or the like to SLS 308. In some examples, SLS 308 can be used to distinguish descriptors of segments 210 ordered in continuous streams of data (e.g., segments ready for forwarding) from descriptors of segments unordered (e.g., waiting for missing segments in stream continuity and thus yet not ready for forwarding).

Continuing to block 512 "forward multicast data segment to MGRD for downstream routing" proxy 230 can forward multicast data segments (e.g., stored in buffer 240) to MGRD 220 for downstream routing. In some examples, TCP Tx block 304 can determine a multicast data segment is ready for forwarding based on the SLS information 308. The TCP Tx block 304 can retrieve the multicast data segment(s) 210 and send them to the MGRD 220 for forwarding downstream. In some examples, if only the segment ready for forwarding fits inside a transmit sliding window, the TCP Tx block 304 retrieves the segment and forwards it to MGRD 220. Accordingly, block 512 may be conditionally, or optically included in logic flow 500. For example, block 512 may conditionally be implemented based on determining that the multicast data segments are ready to forward downstream.

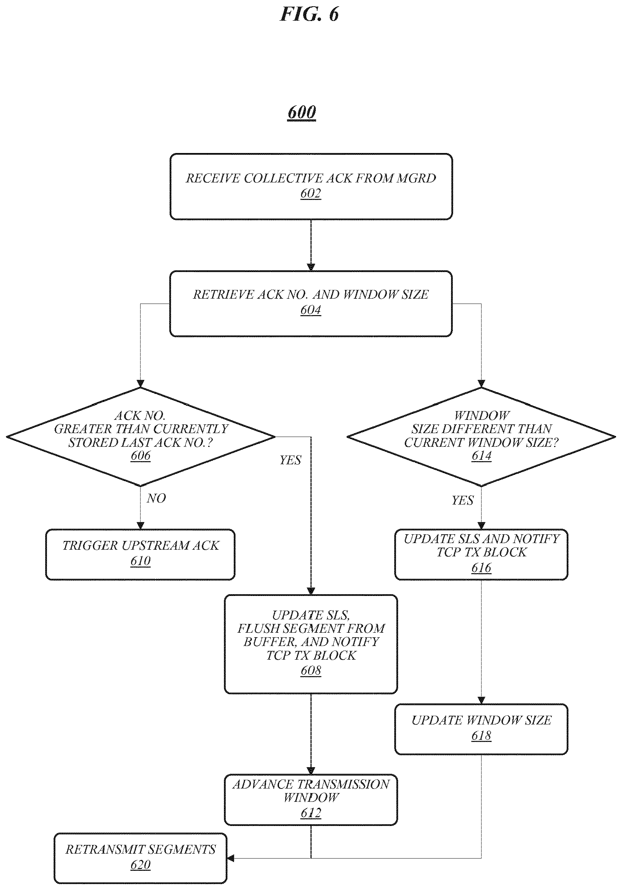

Turning to **FIG. 6** and logic flow 600. Logic flow 600 can begin at block 602. At block 602 "receive collective ACK from MGRD" a collective acknowledgment is received from an MGRD associated with the proxy device. For example, session proxy state controller 306 can receive a collective ACK from MGRD 220 of proxy 230.

Continuing to block 604 "retrieve ACK no. and window size" proxy device can process the collective ACK to retrieve the acknowledgment number and window size. For example, session state proxy controller 306 can process the collective ACK received from MGRD 220 to and identify, determine, retrieve, or the like, the acknowledgement number and window size associated with the collective ACK.

From block 604, logic flow 600 can continue to both decisions blocks 606 and 614. At decision block 606 "ACK no. greater than currently stored last ACK no.?" proxy 230 can determine whether the acknowledgment number of the collective ACK received at block 602 is greater than the currently stored acknowledgment number. Said differently, TCP Tx block 302 can determine whether the acknowledgment number of the collective ACK received at block 602 is greater than the current acknowledgment number indicated in SLS 308.

From decision block 606, the logic flow 600 can continue to either block 608 or block 610. Specifically, logic flow 600 can continue from decision block 606 to block 608 based on a determination that the acknowledgment number of the collective ACK received at block 602 is greater than the current acknowledgment number indicated in SLS 308 while logic flow 600 can continue from decision block 606 to block 610 based on a determination that the acknowledgment number of the collective ACK received at block 602 is not greater than the current acknowledgment number indicated in SLS 308. In some examples, logic flow 600 can continue from decision block 606 to block 610 based on a determination that the acknowledgment number of the collective ACK received at block 602 is equal to the current acknowledgment number indicated in SLS 308.

At block 608 "update SLS, flush segment from buffer, and notify TCP Tx block" proxy can update SLS based on the received collective ACKs and remove the multicast data segment 210 from the buffer 240 that corresponds to the received collective ACKs. For example, session state controller 306 can update the SLS 308 to remove references to the last acknowledged number and further remove descriptors stored in SLS 308 related to the acknowledged data.

Furthermore, session state controller 306 can flush multicast data segments 210 from buffer 240 that correspond to and/or are related to the collective ACKs received at block 602. Additionally, session state controller 306 can notify (e.g., via a control signal, or the like) TCP Tx block 302 of a new acknowledged number.

At block 610 "trigger upstream ACK" proxy 230 can forward the ACK upstream. For example, based on a determination (e.g., at block 606, or the like) that the ACK no. for the collective ACKs is not greater than (e.g., is less than, is equal to, or the like) or based on a determination that the SLS 308 indicates the segment is SYN-RECEIVED or LAST-ACK and the acknowledgement refers to SYN or FIN segments respectively, the TCP Rx block 302 can forward the ACK segment upstream (e.g., in the direction of the source server, or the like).

Continuing from block 608 to block 612 "advance transmission window" proxy 230 can advance the transmission window. For example, TCP Tx block 304 can advance the sliding window.

At decision block 614 "window size different than current window size?" proxy 230 can determine whether the window size is different than the currently stored receive window size for the session (e.g., as indicated in SLS 308, or the like). For example, session state controller 306 can determine whether the window size of the collective ACKs received at block 602 is different than the currently receive window size indicated in SLS 308.

Logic flow 600 can continue from decision block 614 to block 616 based on a determination that the window size is different than the currently stored receive window size for the session. At block 616 "update SLS and notify TCP Tx block" proxy 230 can update SLS to indicate the update window size and notify the TCP Tx block accordingly. For example, session state controller 306 can update SLS 308 to indicate the updated receive window size and can also notify (e.g., via a control signal, or the like) the TCP Tx block 304 about the updated receive window size.

Continuing to block 618 "update window size" proxy 230 can update the window size. For example, TCP Tx block 304 can update the window size. Continuing from blocks 612 and 618 to block 620 "retransmit or process new segment" proxy 230 can retransmit or process a new segment. For example, TCP Tx block 304 can processes new multicast data segments 210 for transmission and/or retransmit multicast data segments 210, for example, as described with respect to logic flow 500 and FIG. 5, and specifically, block 512. Accordingly, block 620 may be conditionally, or optically included in logic flow 600. For example, block 620 may conditionally be implemented based on the above detailed logic flow and determining that the multicast data segments are to be retransmitted.

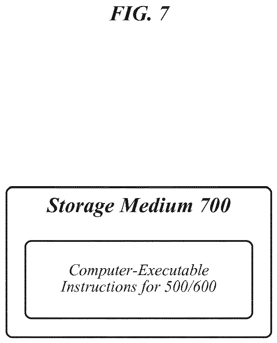

**FIG. 7** illustrates an embodiment of a storage medium 700. Storage medium 700 may comprise any non-transitory computer-readable storage medium or machine-readable storage medium, such as an optical, magnetic or semiconductor storage medium. In various embodiments, storage medium 700 may comprise an article of manufacture. In some embodiments, storage medium 700 may store computer-executable instructions, such as computer-executable instructions to implement logic flow 500 of FIG. 5. In some embodiments, storage medium 700 may store computer-executable instructions, such as computer-executable instructions to implement logic flow 600 of FIG. 6. Examples of a computer-readable storage medium or machine-readable storage medium may include any tangible media capable of storing electronic data, including volatile memory or non-volatile memory, removable or non-removable memory, erasable or non-erasable memory, writeable or re-writeable memory, and so forth. Examples of computer-executable instructions may include any suitable type of code, such as source code, compiled code, interpreted code, executable code, static code, dynamic code, object-oriented code, visual code, and the like. The embodiments are not limited in this context.

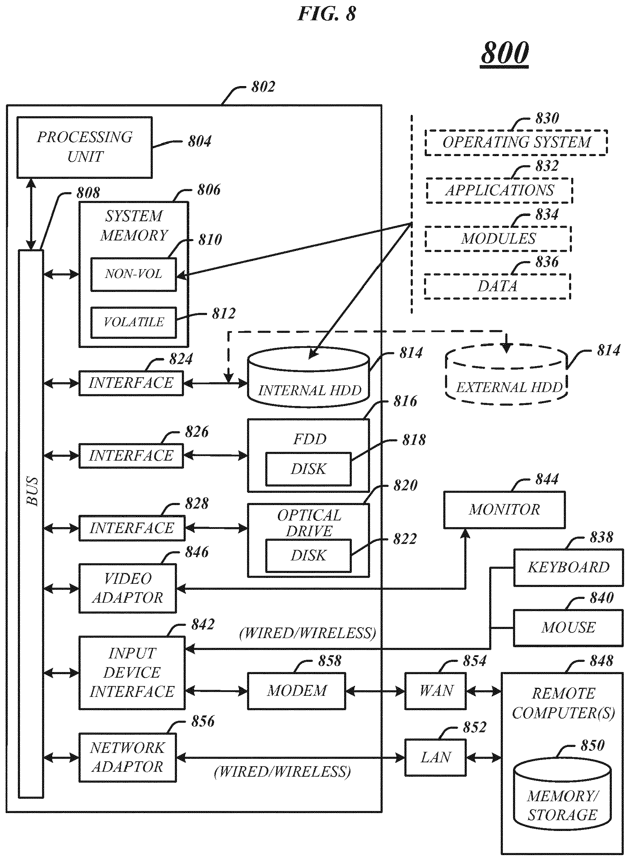

**FIG. 8** illustrates an embodiment of an exemplary computing architecture 800 suitable for implementing various embodiments as previously described. In various embodiments, the computing architecture 800 may comprise or be implemented as part of an electronic device. In some embodiments, the computing architecture 800 may be representative, for example, of apparatus 200 of FIG. 2. The embodiments are not limited in this context. It is important to note, that although the architecture 800 depicted in this figure is depicted as a standalone device (e.g., desktop server) the components can be configured and/or arranged from disaggregate computing components, such as, can be found in a data center. Examples are not limited in tis context.

As used in this application, the terms "system" and "component" and "module" are intended to refer to a computer-related entity, either hardware, a combination of hardware and software, software, or software in execution, examples of which are provided by the exemplary computing architecture 800. For example, a component can be, but is not limited to being, a process running on a processor, a processor, a hard disk drive, multiple storage drives (of optical and/or magnetic storage medium), an object, an executable, a thread of execution, a program, and/or a computer. By way of illustration, both an application running on a server and the server can be a component. One or more components can reside within a process and/or thread of execution, and a component can be localized on one computer and/or distributed between two or more computers. Further, components may be communicatively coupled to each other by various types of communications media to coordinate operations. The coordination may involve the uni-directional or bi-directional exchange of information. For instance, the components may communicate information in the form of signals communicated over the communications media. The information can be implemented as signals allocated to various signal lines. In such allocations, each message is a signal. Further embodiments, however, may alternatively employ data messages. Such data messages may be sent across various connections. Exemplary connections include parallel interfaces, serial interfaces, and bus interfaces.

The computing architecture 800 includes various common computing elements, such as one or more processors, multi-core processors, co-processors, memory units, chipsets, controllers, peripherals, interfaces, oscillators, timing devices, video cards, audio cards, multimedia input/output (I/O) components, power supplies, and so forth. The embodiments, however, are not limited to implementation by the computing architecture 800.

As shown in FIG. 8, the computing architecture 800 comprises a processing unit 804, a system memory 806 and a system bus 808. The processing unit 804 can be any of various commercially available processors, including without limitation an AMD® Athlon®, Duron® and Opteron® processors; ARM® application, embedded and secure processors; IBM® and Motorola® DragonBall® and PowerPC® processors; IBM and Sony® Cell processors; Intel® Celeron®, Core (2) Duo®, Itanium®, Pentium®, Xeon®, and XScale® processors; and similar processors. Dual microprocessors, multi-core processors, and other multi-processor architectures may also be employed as the processing unit 804.

The system bus 808 provides an interface for system components including, but not limited to, the system memory 806 to the processing unit 804. The system bus 808 can be any of several types of bus structure that may further interconnect to a memory bus (with or without a memory controller), a peripheral bus, and a local bus using any of a variety of commercially available bus architectures. Interface adapters may connect to the system bus 808 via a slot architecture. Example slot architectures may include without limitation Accelerated Graphics Port (AGP), Card Bus, (Extended) Industry Standard Architecture ((E)ISA), Micro Channel Architecture (MCA), NuBus, Peripheral Component Interconnect (Extended) (PCI(X)), PCI Express, Personal Computer Memory Card International Association (PCMCIA), and the like.

The system memory 806 may include various types of computer-readable storage media in the form of one or more higher speed memory units, such as read-only memory (ROM), random-access memory (RAM), dynamic RAM (DRAM), Double-Data-Rate DRAM (DDRAM), synchronous DRAM (SDRAM), static RAM (SRAM), programmable ROM (PROM), erasable programmable ROM (EPROM), electrically erasable programmable ROM (EEPROM), flash memory, polymer memory such as ferroelectric polymer memory, ovonic memory, phase change or ferroelectric memory, silicon-oxide-nitride-oxide-silicon (SONOS) memory, magnetic or optical cards, an array of devices such as Redundant Array of Independent Disks (RAID) drives, solid state memory devices (e.g., USB memory, solid state drives (SSD) and any other type of storage media suitable for storing information. In the illustrated embodiment shown in FIG. 8, the system memory 806 can include non-volatile memory 810 and/or volatile memory 812. A basic input/output system (BIOS) can be stored in the non-volatile memory 810.

The computer 802 may include various types of computer-readable storage media in the form of one or more lower speed memory units, including an internal (or external) hard disk drive (HDD) 814, a magnetic floppy disk drive (FDD) 816 to read from or write to a removable magnetic disk 818, and an optical disk drive 820 to read from or write to a removable optical disk 822 (e.g., a CD-ROM or DVD). The HDD 814, FDD 816 and optical disk drive 820 can be connected to the system bus 808 by a HDD interface 824, an FDD interface 826 and an optical drive interface 828, respectively. The HDD interface 824 for external drive implementations can include at least one or both of Universal Serial Bus (USB) and IEEE 1394 interface technologies.

The drives and associated computer-readable media provide volatile and/or nonvolatile storage of data, data structures, computer-executable instructions, and so forth. For example, a number of program modules can be stored in the drives and memory units 810, 812, including an operating system 830, one or more application programs 832, other program modules 834, and program data 836. In one embodiment, the one or more application programs 832, other program modules 834, and program data 836 can include, for example, the various applications and/or components of apparatus 200.

A user can enter commands and information into the computer 802 through one or more wire/wireless input devices, for example, a keyboard 838 and a pointing device, such as a mouse 840. Other input devices may include microphones, infra-red (IR) remote controls, radiofrequency (RF) remote controls, game pads, stylus pens, card readers, dongles, finger print readers, gloves, graphics tablets, joysticks, keyboards, retina readers, touch screens (e.g., capacitive, resistive, etc.), trackballs, trackpads, sensors, styluses, and the like. These and other input devices are often connected to the processing unit 804 through an input device interface 842 that is coupled to the system bus 808, but can be connected by other interfaces such as a parallel port, IEEE 1394 serial port, a game port, a USB port, an IR interface, and so forth.

A monitor 844 or other type of display device is also connected to the system bus 808 via an interface, such as a video adaptor 846. The monitor 844 may be internal or external to the computer 802. In addition to the monitor 844, a computer typically includes other peripheral output devices, such as speakers, printers, and so forth.

The computer 802 may operate in a networked environment using logical connections via wire and/or wireless communications to one or more remote computers, such as a remote computer 848. The remote computer 848 can be a workstation, a server computer, a router, a personal computer, portable computer, microprocessor-based entertainment appliance, a peer device or other common network node, and typically includes many or all of the elements described relative to the computer 802, although, for purposes of brevity, only a memory/storage device 850 is illustrated. The logical connections depicted include wire/wireless connectivity to a local area network (LAN) 852 and/or larger networks, for example, a wide area network (WAN) 854. Such LAN and WAN networking environments are commonplace in offices and companies, and facilitate enterprise-wide computer networks, such as intranets, all of which may connect to a global communications network, for example, the Internet.

When used in a LAN networking environment, the computer 802 is connected to the LAN 852 through a wire and/or wireless communication network interface or adaptor 856. The adaptor 856 can facilitate wire and/or wireless communications to the LAN 852, which may also include a wireless access point disposed thereon for communicating with the wireless functionality of the adaptor 856.

When used in a WAN networking environment, the computer 802 can include a modem 858, or is connected to a communications server on the WAN 854, or has other means for establishing communications over the WAN 854, such as by way of the Internet. The modem 858, which can be internal or external and a wire and/or wireless device, connects to the system bus 808 via the input device interface 842. In a networked environment, program modules depicted relative to the computer 802, or portions thereof, can be stored in the remote memory/storage device 850. It will be appreciated that the network connections shown are exemplary and other means of establishing a communications link between the computers can be used.

The computer 802 is operable to communicate with wire and wireless devices or entities using the IEEE 802 family of standards, such as wireless devices operatively disposed in wireless communication (e.g., IEEE 802.16 over-the-air modulation techniques). This includes at least Wi-Fi (or Wireless Fidelity), WiMax, and Bluetooth™ wireless technologies, among others. Thus, the communication can be a predefined structure as with a conventional network or simply an ad hoc communication between at least two devices. Wi-Fi networks use radio technologies called IEEE 802.11x (a, b, g, n, etc.) to provide secure, reliable, fast wireless connectivity. A Wi-Fi network can be used to connect computers to each other, to the Internet, and to wire networks (which use IEEE 802.3-related media and functions).

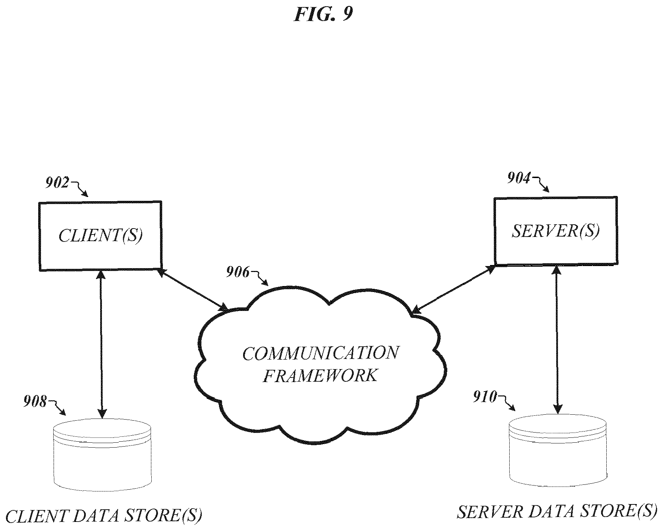

**FIG. 9** illustrates a block diagram of an exemplary communications architecture 900 suitable for implementing various embodiments as previously described. The communications architecture 900 includes various common communications elements, such as a transmitter, receiver, transceiver, radio, network interface, baseband processor, antenna, amplifiers, filters, power supplies, and so forth. The embodiments, however, are not limited to implementation by the communications architecture 900.

As shown in FIG. 9, the communications architecture 900 comprises includes one or more clients 902 and servers 904. The clients 902 and the servers 904 are operatively connected to one or more respective client data stores 908 and server data stores 910 that can be employed to store information local to the respective clients 902 and servers 904, such as cookies and/or associated contextual information. Any one of clients 902 and/or servers 904 may implement one or more of apparatus 200 of FIG. 2, logic flow 500 of FIG. 5, logic flow 600 of FIG. 6, storage medium 700 of FIG. 7, and computing architecture 800 of FIG. 8.

The clients 902 and the servers 904 may communicate information between each other using a communication framework 906. The communications framework 906 may implement any well-known communications techniques and protocols. The communications framework 906 may be implemented as a packet-switched network (e.g., public networks such as the Internet, private networks such as an enterprise intranet, and so forth), a circuit-switched network (e.g., the public switched telephone network), or a combination of a packet-switched network and a circuit-switched network (with suitable gateways and translators).

The communications framework 906 may implement various network interfaces arranged to accept, communicate, and connect to a communications network. A network interface may be regarded as a specialized form of an input output interface. Network interfaces may employ connection protocols including without limitation direct connect, Ethernet (e.g., thick, thin, twisted pair 10/100/1000 Base T, and the like), token ring, wireless network interfaces, cellular network interfaces, IEEE 802.11a-x network interfaces, IEEE 802.16 network interfaces, IEEE 802.20 network interfaces, and the like. Further, multiple network interfaces may be used to engage with various communications network types. For example, multiple network interfaces may be employed to allow for the communication over broadcast, multicast, and unicast networks. Should processing requirements dictate a greater amount speed and capacity, distributed network controller architectures may similarly be employed to pool, load balance, and otherwise increase the communicative bandwidth required by clients 902 and the servers 904. A communications network may be any one and the combination of wired and/or wireless networks including without limitation a direct interconnection, a secured custom connection, a private network (e.g., an enterprise intranet), a public network (e.g., the Internet), a Personal Area Network (PAN), a Local Area Network (LAN), a Metropolitan Area Network (MAN), an Operating Missions as Nodes on the Internet (OMNI), a Wide Area Network (WAN), a wireless network, a cellular network, and other communications networks.

Various embodiments may be implemented using hardware elements, software elements, or a combination of both. Examples of hardware elements may include processors, microprocessors, circuits, circuit elements (e.g., transistors, resistors, capacitors, inductors, and so forth), integrated circuits, application specific integrated circuits (ASIC), programmable logic devices (PLD), digital signal processors (DSP), field programmable gate array (FPGA), logic gates, registers, semiconductor device, chips, microchips, chip sets, and so forth. Examples of software may include software components, programs, applications, computer programs, application programs, system programs, machine programs, operating system software, middleware, firmware, software modules, routines, subroutines, functions, methods, procedures, software interfaces, application program interfaces (API), instruction sets, computing code, computer code, code segments, computer code segments, words, values, symbols, or any combination thereof. Determining whether an embodiment is implemented using hardware elements and/or software elements may vary in accordance with any number of factors, such as desired computational rate, power levels, heat tolerances, processing cycle budget, input data rates, output data rates, memory resources, data bus speeds and other design or performance constraints.

One or more aspects of at least one embodiment may be implemented by representative instructions stored on a machine-readable medium which represents various logic within the processor, which when read by a machine causes the machine to fabricate logic to perform the techniques described herein. Such representations, known as "IP cores" may be stored on a tangible, machine readable medium and supplied to various customers or manufacturing facilities to load into the fabrication machines that actually make the logic or processor. Some embodiments may be implemented, for example, using a machine-readable medium or article which may store an instruction or a set of instructions that, if executed by a machine, may cause the machine to perform a method and/or operations in accordance with the embodiments. Such a machine may include, for example, any suitable processing platform, computing platform, computing device, processing device, computing system, processing system, computer, processor, or the like, and may be implemented using any suitable combination of hardware and/or software. The machine-readable medium or article may include, for example, any suitable type of memory unit, memory device, memory article, memory medium, storage device, storage article, storage medium and/or storage unit, for example, memory, removable or non-removable media, erasable or non-erasable media, writeable or re-writeable media, digital or analog media, hard disk, floppy disk, Compact Disk Read Only Memory (CD-ROM), Compact Disk Recordable (CD-R), Compact Disk Rewriteable (CD-RW), optical disk, magnetic media, magneto-optical media, removable memory cards or disks, various types of Digital Versatile Disk (DVD), a tape, a cassette, or the like. The instructions may include any suitable type of code, such as source code, compiled code, interpreted code, executable code, static code, dynamic code, encrypted code, and the like, implemented using any suitable high-level, low-level, object-oriented, visual, compiled and/or interpreted programming language.
Example 1. A method, comprising: receiving, at a multicast transmission control protocol (TCP) proxy, a multicast data segment from an adjacent upstream node; sending an acknowledgement to include an indication of receipt of the multicast data segment to the adjacent upstream node; and storing the multicast data segment in a buffer coupled to the multicast TCP proxy.
Example 2. The method of example 1, comprising sending the multicast data segment to an adjacent downstream node.
Example 3. The method of example 2, sending the multicast data segment to an adjacent downstream node comprising: retrieving the multicast data segment from the buffer; and sending an information element to the adjacent downstream node, the information element comprising an indication of the multicast data segment.
Example 4. The method of any one of examples 1 to 3, comprising updating a session local state (SLS) record to include an indication of acknowledgement of receipt of the multicast data segment.
Example 5. The method of example 4, comprising updating the SLS record to include an indication of storage of the multicast data segment to the buffer.
Example 6. The method of any one of examples 1 to 3, the multicast TCP proxy comprising the buffer.
Example 7. The method of example 3, comprising receiving a control signal to include an indication of acknowledgment of receipt of the multicast data segment by at least one downstream node.
Example 8. The method of example 7, the control signal to include an indication of acknowledgment of receipt of the multicast data segment by a plurality of downstream nodes.
Example 9. The method of any one of examples 7 to 8, comprising flushing the multicast data segment from the buffer based on receipt of the control signal.
Example 10. At least one non-transitory computer-readable storage medium comprising a set of instructions that, in response to being executed at multicast transmission control protocol (TCP) proxy, cause the multicast TCP proxy to: receive a multicast data segment from an adjacent upstream node; send an acknowledgement to include an indication of receipt of the multicast data segment to the adjacent upstream node; and store the multicast data segment in a buffer coupled to the multicast TCP proxy.
Example 11. The at least one non-transitory computer-readable storage medium of example 10, comprising instructions that, in response to being executed at the multicast TCP proxy, cause the multicast TCP proxy to send the multicast data segment to an adjacent downstream node.
Example 12. The at least one non-transitory computer-readable storage medium of example 11, comprising instructions that, in response to being executed at the multicast TCP proxy, cause the multicast TCP proxy to: retrieve the multicast data segment from the buffer; and send an information element to the adjacent downstream node, the information element comprising an indication of the multicast data segment.
Example 13. The at least one non-transitory computer-readable storage medium of any one of examples 10 to 12, comprising instructions that, in response to being executed at the multicast TCP proxy, cause the multicast TCP proxy to update a session local state (SLS) record to include an indication of acknowledgement of receipt of the multicast data segment.
Example 14. The at least one non-transitory computer-readable storage medium of example 13, comprising instructions that, in response to being executed at the multicast TCP proxy, cause the multicast TCP proxy to update the SLS record to include an indication of storage of the multicast data segment to the buffer.
Example 15. The at least one non-transitory computer-readable storage medium of example 12, comprising instructions that, in response to being executed at the multicast TCP proxy, cause the multicast TCP proxy to receive a control signal to include an indication of acknowledgment of receipt of the multicast data segment by at least one downstream node.
Example 16. The at least one non-transitory computer-readable storage medium of example 15, the control signal to include an indication of acknowledgment of receipt of the multicast data segment by a plurality of downstream nodes.
Example 17. The at least one non-transitory computer-readable storage medium of any one of examples 15 to 16, comprising instructions that, in response to being executed at the multicast TCP proxy, cause the multicast TCP proxy to flush the multicast data segment from the buffer based on receipt of the control signal.
Example 18. An apparatus for a multicast transmission control protocol (TCP) network, comprising: a buffer; and a transmission control protocol (TCP) receiver coupled to the buffer, the TCP receiver to: receive a multicast data segment from an adjacent upstream node in a multicast network; send an acknowledgement to include an indication of receipt of the multicast data segment to the adjacent upstream node; and store the multicast data segment in a buffer coupled to the multicast TCP proxy.
Example 19. The apparatus of example 18, comprising a TCP transmitter coupled to the buffer, the TCP transmitter to send the multicast data segment to an adjacent downstream node.
Example 20. The apparatus of example 19, the TCP transmitter to: retrieve the multicast data segment from the buffer; and send an information element to the adjacent downstream node, the information element comprising an indication of the multicast data segment.
Example 21. The apparatus of example 20, comprising a session proxy state controller coupled to the TCP receiver, the session proxy state controller to: receive a control signal from the TCP receiver to include an indication of acknowledgment of receipt of the multicast data segment; and update a session local state (SLS) record to include an indication of acknowledgement of receipt of the multicast data segment.
Example 22. The apparatus of example 21, the session proxy state controller additionally coupled to the buffer, the session proxy state controller to update the SLS record to include an indication of storage of the multicast data segment to the buffer.
Example 23. The apparatus of example 21, the session proxy state controller to receive an information element from an adjacent downstream node, the information element to include an indication of acknowledgment of receipt of the multicast data segment by at least one downstream node.
Example 24. The apparatus of example 23, the information element to include an indication of acknowledgment of receipt of the multicast data segment by a plurality of downstream nodes.
Example 25. The apparatus of any one of examples 23 to 24, the session proxy state controller to send a control signal to the buffer, the control signal to include an indication to flush the multicast data segment from the buffer based on the information element.
Example 26. The apparatus of any one of examples 18 to 24, comprising a network interface.
Example 27. An apparatus comprising: a buffering means; and a transmission control protocol (TCP) receiver means coupled to the buffer means, the TCP receiver means to: receive a multicast data segment from an adjacent upstream node in a multicast network; send an acknowledgement to include an indication of receipt of the multicast data segment to the adjacent upstream node; and store the multicast data segment in a buffer coupled to the multicast TCP proxy.
Example 28. The apparatus of example 27, comprising a TCP transmitter means coupled to the buffer means, the TCP transmitter means to send the multicast data segment to an adjacent downstream node.
Example 29. The apparatus of example 28, the TCP transmitter means to: retrieve the multicast data segment from the buffer; and send an information element to the adjacent downstream node, the information element comprising an indication of the multicast data segment.
Example 30. The apparatus of example 29, comprising a session proxy state controller means coupled to the TCP receiver means, the session proxy state controller means to: receive a control signal from the TCP receiver means to include an indication of acknowledgment of receipt of the multicast data segment; and update a session local state (SLS) record to include an indication of acknowledgement of receipt of the multicast data segment.
Example 31. The apparatus of example 30, the session proxy state controller means additionally coupled to the buffer means, the session proxy state controller to update the SLS record to include an indication of storage of the multicast data segment to the buffer means.
Example 32. The apparatus of example 30, the session proxy state controller means to receive an information element from an adjacent downstream node, the information element to include an indication of acknowledgment of receipt of the multicast data segment by at least one downstream node.
Example 33. The apparatus of example 32, the information element to include an indication of acknowledgment of receipt of the multicast data segment by a plurality of downstream nodes.
Example 34. The apparatus of any one of examples 32 to 34, the session proxy state controller means to send a control signal to the buffer means, the control signal to include an indication to flush the multicast data segment from the buffer means based on the information element.
Example 35. A system comprising: an apparatus according any one of examples 18 to 25; and at least one network interface.

## Claims

1. A method, comprising:
receiving, at a multicast transmission control protocol (TCP) proxy, a multicast data segment from an adjacent upstream node;
sending an acknowledgement to include an indication of receipt of the multicast data segment to the adjacent upstream node; and
storing the multicast data segment in a buffer coupled to the multicast TCP proxy.

2. The method of claim 1, comprising sending the multicast data segment to an adjacent downstream node.

3. The method of claim 2, sending the multicast data segment to an adjacent downstream node comprising:
retrieving the multicast data segment from the buffer; and
sending an information element to the adjacent downstream node, the information element comprising an indication of the multicast data segment.

4. The method of claim 1, comprising updating a session local state (SLS) record to include an indication of acknowledgement of receipt of the multicast data segment.

5. The method of claim 4, comprising updating the SLS record to include an indication of storage of the multicast data segment to the buffer.

6. The method of claim 1, the multicast TCP proxy comprising the buffer.

7. The method of claim 3, comprising receiving a control signal to include an indication of acknowledgment of receipt of the multicast data segment by at least one downstream node.

8. The method of claim 7, the control signal to include an indication of acknowledgment of receipt of the multicast data segment by a plurality of downstream nodes.

9. The method of claim 7, comprising flushing the multicast data segment from the buffer based on receipt of the control signal.

10. At least one non-transitory computer-readable storage medium comprising a set of instructions that, in response to being executed at multicast transmission control protocol (TCP) proxy, cause the multicast TCP proxy to perform the method of any one of claims 1 to 9.

11. An apparatus for a multicast transmission control protocol (TCP) network, comprising:
a buffer; and
a transmission control protocol (TCP) receiver coupled to the buffer, the TCP receiver to:
receive a multicast data segment from an adjacent upstream node in a multicast network;
send an acknowledgement to include an indication of receipt of the multicast data segment to the adjacent upstream node; and
store the multicast data segment in a buffer coupled to the multicast TCP proxy.

12. The apparatus of claim 11, comprising a TCP transmitter coupled to the buffer, the TCP transmitter to send the multicast data segment to an adjacent downstream node.

13. The apparatus of claim 12, the TCP transmitter to:
retrieve the multicast data segment from the buffer; and
send an information element to the adjacent downstream node, the information element comprising an indication of the multicast data segment.

14. The apparatus of claim 13, comprising a session proxy state controller coupled to the TCP receiver, the session proxy state controller to:
receive a control signal from the TCP receiver to include an indication of acknowledgment of receipt of the multicast data segment; and
update a session local state (SLS) record to include an indication of acknowledgement of receipt of the multicast data segment.

15. The apparatus of claim 14, the session proxy state controller additionally coupled to the buffer, the session proxy state controller to update the SLS record to include an indication of storage of the multicast data segment to the buffer.
